# EUROPÄISCHE PATENTSCHRIFT

(11) **EP 0 979 185 B1**
(45) Veröffentlichungstag und Bekanntmachung des Hinweises auf die Patenterteilung: **19.06.2002**
(21) Anmeldenummer: 98925410.7
(22) Anmeldetag: 13.03.1998
(51) Int. Cl.: B60R 21/20

(54) **AIRBAGABDECKKAPPE AUS TRÄGER- UND DECKSCHICHT UNTERSCHIEDLICHER ELASTIZITÄT**
AIRBAG COVERING CAP COMPRISING A SUPPORT LAYER AND A COVER LAYER OF DIFFERENT ELASTICITIES
ELEMENT DE RECOUVREMENT D'AIRBAG CONSTITUE D'UNE COUCHE DE SUPPORT ET D'UNE COUCHE DE RECOUVREMENT PRESENTANT DES ELASTICITES DIFFERENTES

(30) Priorität: 28.04.1997 DE 19718931
(43) Veröffentlichungstag der Anmeldung: 16.02.2000
(73) Patentinhaber: Takata-Petri AG, 63743 Aschaffenburg (DE)
(72) Erfinder: HELFRICH, Rudolf, D-63743 Aschaffenburg (DE); VÄTH, Norbert, D-97839 Esselbach (DE); KLEIN, Thomas, D-63814 Mainaschaff (DE); KRESS, Bernhard, D-63768 Hösbach (DE); WOLLEB, Norbert, D-63739 Aschaffenburg (DE); SIEIRA, Tomás, E-36205 Vigo (ES); HAUCK, Hans, Martin, D-64285 Darmstadt (DE)
(74) Vertreter: Bärmann, Klaus, Dipl.-Ing.
(86) Internationale Anmeldenummer: DE9800808
(87) Internationale Veröffentlichungsnummer: WO9849033

(56) Entgegenhaltungen:
- EP-A- 0 428 935
- EP-A- 0 487 753
- WO-A-95/24328
- GB-A- 2 270 884
- US-A- 5 536 037

## Beschreibung

Die Erfindung betrifft eine Airbagabdeckkappe aus Trägerund Deckschicht unterschiedlicher Elastizität nach dem Oberbegriff des Anspruchs 1.

Aus der DE 195 16 230 A1 ist eine Airbag-Abdeckung bekannt, die aus einem Formteil als Trägerschicht und einer das Formteil überdeckenden Sichtbedeckung als Deckschicht besteht. Die Deckschicht ist in Form einer Lederbeschichtung mit einer nutförmigen partiellen Materialdickenreduzierung ausgebildet, in die hinein sich die Trägerschicht erstreckt. An dieser Stelle ist in die Tägerschicht eine Sollbruchstelle eingeformt, deren Verlauf dem der Nut der Deckschicht entspricht, d.h. Sollbruchstellen in der Träger- und Deckschicht liegen übereinander.

Durch die Hinterspritzung der Deckschicht, eingeformt in die Nut, wird erreicht, daß auf der Sichtseite der Sichtbedeckung keine Materialreduzierung sichtbar ist und eine glatte Oberfläche der Sichtseite der Deckschicht erzielt wird. Ziernuten, wie sie bei einer Schwächung der Oberseite der Deckschicht vorgesehen sind , sind deshalb nicht erforderlich.

Bei dieser Abdeckung wie bei anderen bekannten Abdeckungen mit Schwächungslinien ist beabsichtigt, daß das Aufreißen im Crashfall entlang der Schwächungslinien erfolgt. Das Aufreißen sollte aber nicht über das Ende der Schwächungslinien hinausgehen. Der Nachteil der vorher beschriebenen bekannten Abdeckung besteht aber darin, daß dieses Weiterreißen über das Nutende hinaus nicht auszuschließen ist.

Zur Verhinderung des Weiterreißens ist es bekannt, eine kleine Öffnung am Ende der Nut vorzusehen, wobei die Öffnung einen größeren Durchmesser aufweist als die Breite der Bruchlinie. Dadurch ergibt sich aber der Nachteil, daß die Oberfläche der Abdeckung durchbrochen ist, so daß das Aussehen beeinträchtigt wird.

Weiterhin ist aus der DE 44 24 686 A1 bekannt, die Endabschnitte der Bruchlinie gekrümmt auszuführen, wodurch das Weiterreißen über das Ende der Bruchlinie hinaus ebenfalls verhindert werden soll.

Aus der WO 95/24328 ist eine Airbag-Abdeckung bekannt, die eine Trägerschicht und eine darüber liegende Deckschicht aufweist. In beiden Schichten sind linienförmige Materialschwächungen vorgesehen, die versetzt zueinander angeordnet sind.

Alle bekannten Abdeckkappen haben den Nachteil, daß die Auf- und Weiterreißkraft nicht veränderbar ist, ohne daß sich die optischen und/oder mechanischen Eigenschaften der Abdeckkappe ändern. Wird die Nut z.B. vertieft, um die Aufreißkraft zu verringern, wird gleichzeitig die Gefahr des Weiterreißens an den Enden vergrößert.

Der Erfindung liegt die Aufgabe zugrunde, bei einer Airbagabdeckkappe mit glatter Deckschichtoberfläche das Aufreißen mit geringerer Kraft zu ermöglichen, ohne daß die Kappe über das Ende der vorgesehenen Bruchlinie hinaus weiterreißt, und die Auf- und Weiterreißkraft zu verändern, ohne daß sich die optischen und/oder mechanischen Eigenschaften ändern.

Erfindungsgemäß wird das gemäß den Merkmalen des Anspruchs 1 erreicht.

Bei einer Airbagabdeckkappe aus Träger- und Deckschicht unterschiedlicher Elastizität mit mindestens einer Aufreißlinie, entlang der die Airbagabdeckkappe bei sich entfaltendem Airbag aufreißt, wobei die Deckschicht im Bereich der Aufreißlinie durch eine Nut geschwächt ist und sich die Trägerschicht in diese Nut hinein erstreckt, weist die Deckschicht angrenzend an den Abschnitt der Trägerschicht, der sich in die Nut hinein erstreckt, erfindungsgemäß einen Abschnitt auf, der sich in die Trägerschicht hinein erstreckt, wobei die Kante zwischen den Abschnitten der Träger- und Deckschicht, die sich in die jeweils andere Schicht erstrecken, als Aufreißkante ausgebildet ist.

Im Gegensatz zu bekannten Airbagabdeckungen weist sowohl die Trägerschicht als auch die Deckschicht im Bereich der Bruchstelle einen verstärkten Abschnitt auf. Zwischen diesen beiden Abschnitten erstreckt sich eine durch beide Schichten verlaufende Aufreißkante, d.h. diese ist im Querschnitt gesehen wesentlich länger als bei bekannten Abdeckkappen. Entlang dieser Aufreißkante reißt die Abdeckkappe im Crashfall ausgehend von der Schwächungslinie oberhalb der Nut in der Deckschicht auf, wobei die Haftung zwischen dem Material der Träger- und der Deckschicht an der Aufreißkante gering ist. Die verstärkten Abschnitte und die verlängerte Aufreißkante verhindern einerseits, daß die Airbagabdeckkappe am Ende der Nut der Deckschicht weiter aufreißt und andererseits gewährleisten sie zusätzlich, daß die Airbagabdeckkappe entlang der vorgesehenen Linie aufreißt.

In einer Ausführungsform ist die Trägerschicht im Bereich der Aufreißkante zwischen den Abschnitten der Träger- und Deckschicht gegenüber den übrigen Bereichen schwächer ausgebildet und die Deckschicht erstreckt sich in den Schwächungsbereich hinein. Bei dieser Ausführungsform ist sowohl die Deckschicht als auch die Trägerschicht im Bereich der Aufreißkante durchgehend ausgeführt. Die Airbagabdeckung reißt im Crashfall sowohl an den geschwächten Stellen der Deckschicht als auch der Trägerschicht ein und entlang der Aufreißkante zwischen beiden auf.

In einer weiteren Ausführungsform ist vorgesehen, daß die Trägerschicht im Bereich der Aufreißkante zwischen den Abschnitten der Träger- und Deckschicht mindestens einen Schlitz aufweist und daß sich die Deckschicht mindestens teilweise in den Schlitz hinein erstreckt. Bei dieser Ausführungsform ist die Trägerschicht im Bereich der Aufreißkante nicht durchgehend ausgebildet. Dadurch muß bei dieser Ausführungsform die Airbagabdeckung im Crashfall nur an der geschwächten Stelle der Deckschicht einreißen. Sie reißt anschließend wieder entlang der Aufreißkante zwischen Träger- und Deckschicht auf.

In einer dritten Ausführungsform ist ebenfalls ein Schlitz vorgesehen, der aber durch dünne, schmale Stege überbrückt ist. Die Stege weisen zweckmäßig eine Breite von maximal 0,8 mm auf und sind im Abstand von mindestens 10 mm angeordnet.

Die Dicke der Deckschicht oberhalb des sich in die Deckschicht erstreckenden Abschnitts der Trägerschicht nimmt zweckmäßig zu den Enden der Aufreißbereiche hin zu, wodurch das Weiterreißen der Abdeckkappe beeinflußt werden kann.

In einer weiteren Ausgestaltung der zweiten Ausführungsform ist vorgesehen, daß der Rand des Schlitzes in der Trägerschicht wulstartig verstärkt ist. Eine solche Verstärkung ist bei der ersten Ausführungsform an den Rändern des Schwächungsbreiches in der Trägerschicht ebenfalls möglich. Dadurch wird noch weitergehend gesichert, daß die Airbagabdeckung nicht außerhalb der vorgesehenen Aufreißstellen aufreißt.

Es ist zweckmäßig, daß die Aufreißkante gegenüber der Oberfläche der Deckschicht und der Trägerschicht in diesem Bereich schräg verläuft. Durch die Änderung des schrägen Verlaufs und des Verlaufs der Aufreißkante im Querschnitt ist es möglich, die Auf- und Weiterreißkraft einzustellen, ohne daß sich die optischen oder mechanichen Eigenschaften ändern. Die Aufreißkante verläuft im Querschnitt vorzugsweise gradlinig, kann aber auch gradlinig abgewinkelt oder gekrümmt verlaufen.

Die zwischen der Träger- und der Deckschicht an der Aufreißkante vorgesehene verminderte Haftung kann durch Wahl entsprechender Materialien für die Träger- und Deckschicht erzielt werden, wobei dann die Haftung auch in den übrigen Bereichen vermindert ist. Die verminderte Haftung kann aber auch durch eine Oberflächenbehandlung der Trägerschicht in diesem Bereich vor dem Aufbringen der Deckschicht erzielt werden.

Es ist zweckmäßig, als Trägerschicht und als Deckschicht thermoplastische Elastomere zu verwenden.

Die Erfindung soll in Ausführungsbeispielen anhand von Zeichnungen erläutert werden. Es zeigen:
- Fig. 1: eine Ansicht der Unterseite einer Abdeckkappe;
- Fig. 2: einen Schnitt durch die Abdeckkappe nach Fig. 1;
- Fig. 3 - 6: unterschiedliche Ausführungsformen des Aufreißbereiches der Abdeckkappe in vergrößerter Darstellung der durch einen Kreis gekennzeichneten Einzelheit nach Fig. 2;
- Fig, 7: eine Ansicht von unten auf die Einzelheit der Fig. 6 mit durchgehendem Steg;
- Fig. 8: eine Ansicht von unten auf die Einzelheit der Fig. 6 mit mehreren schmalen Stegen.

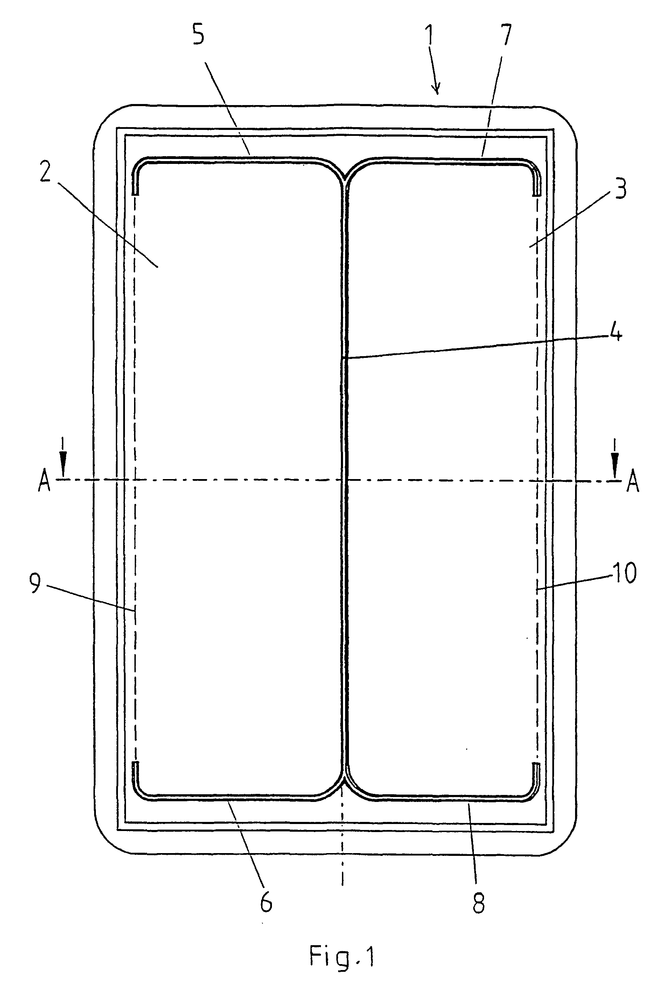

Die in Fig. 1 dargestellte Abdeckkappe 1 soll im Crashfall zweiteiig aufreißen. Hierzu sind zwei Klappbereiche 2, 3 vorgesehen, die in der Mitte der Abdeckkappe einen gemeinsamen Aufreißbereich 4 aufweisen. An den Enden sind getrennte Aufreißbereiche 5, 6 bzw. 7, 8 vorgesehen, die in scharnierartige Abschnitte 9, 10 münden, die in bekannter Weise z.B. als Filmscharnier ausgeführt sind und nicht detailliert dargestellt sind.

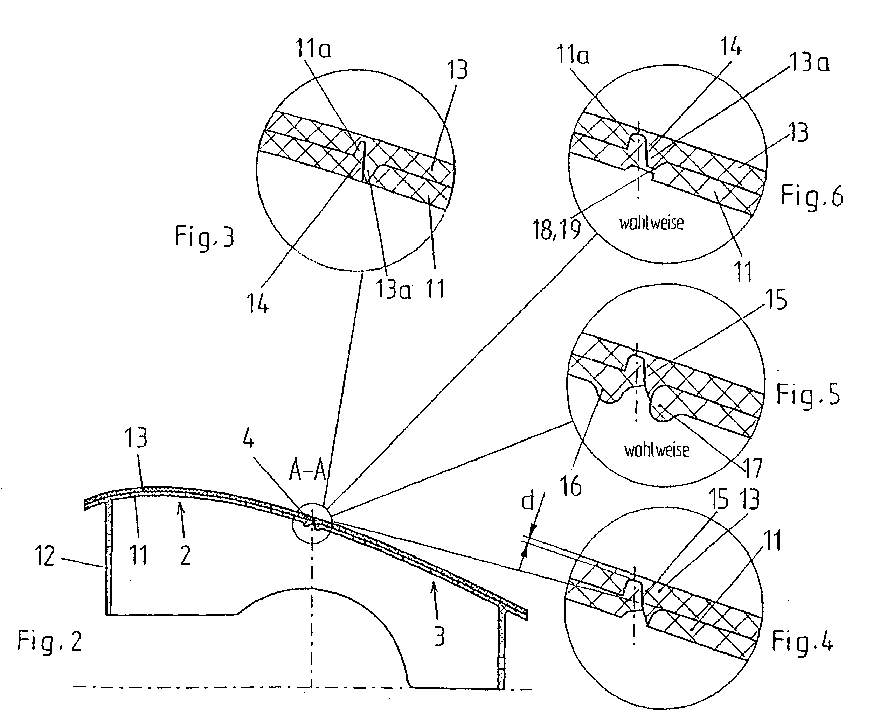

Aus der Fig. 2 ist ersichtlich, daß die Abdeckkappe eine Trägerschicht 11 mit einem Rand 12 aufweist und daß über der Trägerschicht 11 eine Deckschicht 13 vorgesehen ist. Beide bestehen vorzugsweise aus Kunststoff, wobei das Material der Deckschicht weicher ist als das Material der Trägerschicht. Die Deckschicht 13 weist eine durchgehende Oberfläche auf, während sie auf der Unterseite in erfindungsgemäßer Weise ausgeführt ist.

In einer ersten Ausführungsform, die in der Fig. 3 vergrößert dargestellt ist, weist die Deckschicht im Aufreißbereich 4 - 8 eine Nut auf, in die hinein sich ein Abschnitt 11a der Trägerschicht erstreckt. Die Trägerschicht weist im Aufreißbereich 4 - 8 einen Schlitz auf, d.h. die Klappbereiche 2, 3 sind in der Trägerschicht voneinander getrennt. In diesen Schlitz hinein erstreckt sich ein Abschnitt 13a der Deckschicht 13. Zwischen beiden Abschnitten 11a und 13a verläuft eine Aufreißkante 14. Diese verläuft im vorliegenden Ausführungsbeispiel im Querschnitt geradlinig und erstreckt sich nahezu durch durch die gesamte Träger- und Deckschicht. Durch die verstärkten Abschnitte 11a und 13a erhalten die Träger- und die Deckschicht im Bereich dieser Aufreißkante 14 eine erhöhte Festigkeit, so daß ein Weiterreißen an den Enden der Aufreißbereiche 5 - 8, die an die scharnierartigen Abschnitte 9, 10 angrenzen, verhindert wird. Weiterhin ist durch Veränderung der Neigung der Aufreißkante 14 die für das Auf- und Weiterreißen der Abdeckkappe notwendige Kraft beeinflußbar, ohne daß sich die optischen und mechanischen Eigenschaften des Aufreißbereichs ändern, d.h. sowohl die durchgehende Oberfläche der Deckschicht 13 als auch die verstärkten Abschnitte 11a und 13a bleiben erhalten.

Die Dicke d der Deckschicht 13 über dem Abschnitt 11a beträgt vorzugsweise wenige zehntel Millimeter und an den Enden der Aufreißbereiche 5 - 8 ca. einen Millimeter.

Beim Aufblasen dehnen sich die Trägerschicht 11 und die Deckschicht 13 infolge ungleicher Elastizität unterschiedlich. Das Deckmaterial reißt über dem verstärkten Abschnitt 11a der Trägerschicht 11 ein und löst sich entlang der schräg verlaufenden Aufreißkante 14 vom Trägermaterial. Die Haftung zwischen der Träger- und der Deckschicht ist jedoch andererseits so groß, daß beide beim Aufreißen der Abdeckkappe in den übrigen Bereichen miteinander verbunden bleiben, so daß die Abdeckkappe vollständig aufreißt.

Beim Ausführungsbeispiel der Fig. 4 ist gegenüber dem Ausführungsbeispiel der Fig. 3 ein veränderter Verlauf der Aufreißkante vorgesehen. Im Querschnitt verläuft diese Aufreißkante 15 geradlinig abgewinkelt, d.h. sie weist zwei Abschnitte auf, die in unterschiedlichen Winkeln bezüglich der Oberfläche der Abdeckkappe verlaufen.

Eine Abwandlung des Ausführungsbeispiels der Fig 4 ist in Fig. 5 dargestellt. Dort weist die Trägerschicht im Bereich der Aufreißkante 15 wulstförmige Verstärkungen 16, 17 auf.

Dadurch wird der Vorgang des Weiterreißens entlang der Aufreißkante 15 noch verbessert.

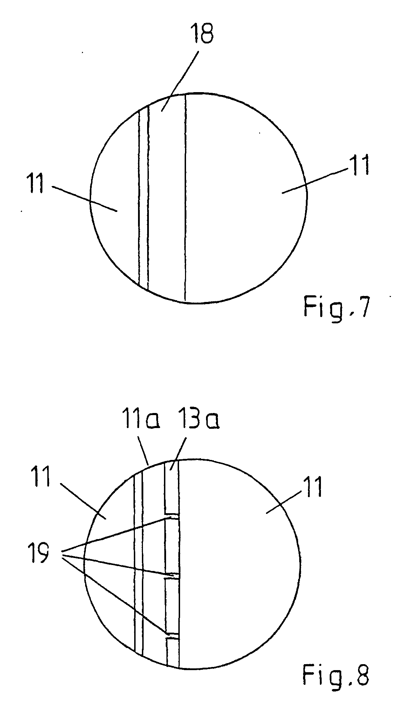

In der Fig. 6 sind die beiden Ausführungsformen der Figuren 7 und 8 im Schnitt dargestellt, der in beiden Fällen gleich ist. Beim Ausführungsbeispiel der Fig. 7 weist die Trägerschicht 11 im Bereich der Aufreißkante keinen Schlitz sondern eine Schwächung des Materials auf, so daß ein Steg 18 verbleibt. Im vorliegenden Ausführungsbeispiel ist die Schwächung beidseitig vorgenommen worden. Der verstärkte Abschnitt 13a der Deckschicht 13 erstreckt sich in den geschächten Bereich der Trägerschicht hinein bis zum Steg 18. Der Steg weist eine solche Breite auf, daß er trotz der unterschiedlichen Elastizität der Träger- und Deckschicht zusammen mit der Deckschicht oberhalb des verstärkten Abschnitts 11a aufreißt.

Im Ausführungsbeispiel der Fig. 8 weist die Trägerschicht 11 einen Schlitz auf, der durch Stege 19 überbrückt ist, die sich von einer Seite der Trägerschicht 11 zur anderen Seite erstrecken. Der verstärkte Abschnitt 13a ist somit in der Fig. 8 zwischen den Stegen 19 erkennbar.

## Patentansprüche

1. Airbagabdeckkappe aus Träger- und Deckschicht unterschiedlicher Elastizität mit mindestens einer Aufreißlinie entlang der die Airbagabdeckkappe bei sich entfaltendem Airbag aufreißt, wobei die Deckschicht im Bereich der Aufreißlinie durch eine Nut geschwächt ist und sich die Trägerschicht in diese Nut hinein erstreckt,
**dadurch gekennzeichnet,**
**daß** die Deckschicht (13) angrenzend an den Abschnitt (11a) der Trägerschicht (11), der sich in die Nut hinein erstreckt, einen Abschnitt (13a) aufweist, der sich in die Trägerschicht (11) hinein erstreckt, wobei die Kante zwischen den Abschnitten (11a, 13a) der Träger- und Deckschicht (11, 13), die sich in die jeweils andere Schicht erstrekken, als Aufreißkante (14, 15) ausgebildet ist.

2. Airbagabdeckkappe nach Anspruch 1, **dadurch gekennzeichnet, daß** die Trägerschicht (11) im Bereich der Aufreißkante (14) gegenüber den übrigen Bereichen schwächer ausgebildet ist und daß sich die Deckschicht (13) in den Schwächungsbereich hinein erstreckt.

3. Airbagabdeckkappe nach Anspruch 1 oder 2, **dadurch gekennzeichnet, daß** die Trägerschicht (11) im Bereich der Aufreißkante (14, 15) mindestens einen Schlitz aufweist und daß sich die Deckschicht (13) mindestens teilweise in den Schlitz hinein erstreckt.

4. Airbagabdeckkappe nach Anspruch 3, **dadurch gekennzeichnet, daß** der Schlitz durch dünne, schmale Stege (19) überbrückt ist.

5. Airbagabdeckkappe nach Anspruch 3 oder 4, **dadurch gekennzeichnet, daß** die Stege (19) eine Breite von maximal 0,8 mm aufweisen und im Abstand von mindestens 10 mm angeordnet sind.

6. Airbagabdeckkappe nach mindestens einem der vorhergehenden Ansprüche, **dadurch gekennzeichnet, daß** die Dicke (d) der Deckschicht (13) oberhalb des sich in die Deckschicht erstreckenden Abschnitts (11a) der Trägerschicht (11) zu den Enden der Aufreißbereiche (5 - 8) hin zunimmt.

7. Airbagabdeckkappe nach mindestens einem der Ansprüche 3 bis 6, **dadurch gekennzeichnet, daß** am Rand des Schlitzes wulstförmige Verstärkungen (16, 17) vorgesehen sind.

8. Airbagabdeckkappe nach mindestens einem der vorhergehenden Ansprüche, **dadurch gekennzeichnet, daß** die Aufreißkante (14, 15) gegenüber der Oberfläche der Deckschicht und der Trägerschicht in diesem Bereich schräg verläuft.

9. Airbagabdeckkappe nach mindestens einem der vorhergehenden Ansprüche, **dadurch gekennzeichnet, daß** die Aufreißkante (14, 15) im Querschnitt gradlinig, gradlinig abgewinkelt oder gekrümmt verläuft.

10. Airbagabdeckkappe nach mindestens einem der vorhergehenden Ansprüche, **dadurch gekennzeichnet, daß** Träger- und Deckschicht (11, 13) an der Aufreißkante (14, 15) eine verminderte Haftung aufweisen.

11. Airbagabdeckkappe nach mindestens einem der vorhergehenden Ansprüche, **dadurch gekennzeichnet, daß** für die Träger- und Deckschicht (11, 13) Material verwendet wird, bei dem die gegenseitige Haftung vermindert ist.

12. Airbagabdeckkappe nach mindestens einem der vorherigen Ansprüche, **dadurch gekennzeichnet, daß** die Träger- und die Deckschicht (11, 13) aus thermoplastischen Elastomeren bestehen.

## Claims

1. Airbag covering cap consisting of a support and cover layer of different elasticity with at least one tear-off line along which the airbag covering cap tears open in the event of an unfolding airbag whereby the cover layer is weakened in the area of the tear-off line by a groove and the support layer extends into this groove,
**characterised in that**
the cover layer (13) has adjoining the section (11a) of the support layer (11) which extends into the groove a section (13a) which extends into the support layer (11) whereby the edge between the sections (11a, 13a) of the support and cover layer (11,13) which each extend into each other layer, is formed as a tear-off edge (14,15).

2. Airbag covering cap according to claim 1 **characterised in that** the support layer (11) is formed weaker in the area of the tear-off edge (14) than in the remaining areas and that the cover layer (13) extends into the weakened area.

3. Airbag covering cap according to claim 1 or 2 **characterised in that** the support layer (11) has in the area of the tear-off edge (14,15) at least one slit and that the cover layer (13) extends at least in part into the slit.

4. Airbag covering cap according to claim 3 **characterised in that** the slit is bridged by thin narrow webs (19).

5. Airbag covering cap according to claim 3 or 4 **characterised in that** the webs (19) have a width of 0.8 mm maximum and are arranged at intervals of at least 10 mm.

6. Airbag covering cap according to at least one of the preceding claims **characterised in that** the thickness (d) of the cover layer (13) above the section (11a) of the support layer (11) extending into the cover layer increases to the ends of the tear-off areas (5 - 8).

7. Airbag covering cap according to at least one of claims 3 to 6 **characterised in that** bead-like reinforcements (16,17) are provided on the edge of the slit.

8. Airbag covering cap according to at least one of the preceding claims **characterised in that** the tear-off edge (14,15) opposite the surface of the cover layer and support layer runs inclined in this area.

9. Airbag covering cap according to at least one of the preceding claims **characterised in that** the tear-off edge (14,15) in cross-section runs in a straight line, angled in straight lines or curved.

10. Airbag covering cap according to at least one of the preceding claims **characterised in that** the support and cover layers (11,13) have reduced adhesion at the tear-off edges (14,15).

11. Airbag covering cap according to at least one of the preceding claims **characterised in that** a material is used for the support and cover layers (11,13) wherein the mutual adhesion is reduced.

12. Airbag covering cap according to at least one of the preceding claims **characterised in that** the support and cover layer (11,13) consist of thermoplastics elastomers.

## Revendications

1. Élément de recouvrement d'airbag constitué d'une couche de support et d'une couche de recouvrement présentant des élasticités différentes avec au moins une ligne de déchirement le long de laquelle l'élément de recouvrement d'airbag se déchire lorsque l'airbag se déploie, la couche de recouvrement dans la zone de la ligne de déchirement étant rendue moins solide au moyen d'une rainure et la couche de support s'étendant dans cette rainure,
**caractérisé en ce que**
la couche de recouvrement (13) présente une section (13a) dans la zone contiguë à la section (11a) de la couche de support (11) qui s'étend à l'intérieur de la rainure, laquelle section (13a) s'étend dans la couche de recouvrement, l'arête entre les sections (11a, 13a) des couches de support et de recouvrement (11, 13) qui s'étendent chacune dans l'autre couche consistant en une arête de déchirement (14, 15).

2. Élément de recouvrement d'airbag selon la revendication 1 **caractérisé en ce que** la couche de support (11) dans la zone de l'arête de déchirement (14) est moins solide que les autres zones et que la couche de recouvrement (13) s'étend dans la zone de moindre solidité.

3. Élément de recouvrement d'airbag selon la revendication 1 ou 2 **caractérisé en ce que** la couche de support (11) dans la zone de l'arête de déchirement (14, 15) présente au moins une fente et que la couche de recouvrement (13) s'étend au moins en partie à l'intérieur de la fente.

4. Élément de recouvrement d'airbag selon la revendication 3 **caractérisé en ce que** la fente est surmontée par des arcades (19) minces et étroites.

5. Élément de recouvrement d'airbag selon la revendication 3 ou 4 **caractérisé en ce que** les arcades (19) ont une largeur maximale de 0,8 mm et qu'elles sont disposées selon des intervalles d'au moins 10 mm.

6. Élément de recouvrement d'airbag selon au moins l'une des revendications précédentes **caractérisé en ce que** l'épaisseur (d) de la couche de recouvrement (13) située au-dessus de la section (11a) de la couche de support (11) qui s'étend dans la couche de recouvrement augmente aux extrémités des zones de déchirement.

7. Élément de recouvrement d'airbag selon au moins l'une des revendications 3 à 6 **caractérisé en ce qu'**on a prévu au bord de la fente des renforcements (16, 17) en forme de bourrelet.

8. Élément de recouvrement d'airbag selon au moins l'une des revendications précédentes **caractérisé en ce que** l'arête de déchirement (14, 15) par rapport à la surface de la couche de recouvrement et à la couche de support s'étend de biais dans cette zone.

9. Élément de recouvrement d'airbag selon au moins l'une des revendications précédentes **caractérisé en ce que** l'arête de déchirement (14, 15) s'étend en section transversale en ligne droite, en ligne droite repliée ou en formant une courbure.

10. Élément de recouvrement d'airbag selon au moins l'une des revendications précédentes **caractérisé en ce que** les couches de support et de recouvrement (11, 13) présentent une adhérence moins grande sur l'arête de déchirement (14, 15).

11. Élément de recouvrement d'airbag selon au moins l'une des revendications précédentes **caractérisé en ce qu'**on utilise pour les couches de support et de recouvrement (11, 13) un matériau pour lequel l'adhérence opposée est réduite.

12. Élément de recouvrement d'airbag selon au moins l'une des revendications précédentes **caractérisé en ce que** les couches de support et de recouvrement (11, 13) sont constituées en élastomères thermoplastiques.
